# EUROPÄISCHE PATENTSCHRIFT

(11) **EP 0 650 939 B1**
(45) Veröffentlichungstag und Bekanntmachung des Hinweises auf die Patenterteilung: **04.12.1996**
(21) Anmeldenummer: 94116230.7
(22) Anmeldetag: 14.10.1994
(51) Int. Cl.: C04B 18/02, B01J 2/22, B01J 2/12, B01J 2/14, C09C 3/00

(54) **Verfahren zur Einfärbung von Baustoffen**
Method of coloring building materials
Méthode pour la coloration des matériaux de construction

(30) Priorität: 27.10.1993 DE 4336613
(43) Veröffentlichungstag der Anmeldung: 03.05.1995
(73) Patentinhaber: BAYER AG, 51368 Leverkusen (DE)
(72) Erfinder: Linde, Günter, Dr., D-47800 Krefeld (DE); Eitel, Manfred, Dr., D-47906 Kempen (DE)

(56) Entgegenhaltungen:
- EP-A- 0 365 046
- FR-A- 2 018 912
- FR-A- 2 076 134
- FR-A- 2 132 724
- FR-A- 2 622 483
- US-A- 2 167 432

## Beschreibung

Die vorliegende Erfindung betrifft ein Verfahren zur Einfärbung von Baustoffen wie Beton oder Asphalt durch anorganische Pigmentgranulate.

Die Verarbeitung von Pigmenten verlangt zur Erzielung des optimalen Farbeindrucks ein Aufmahlen der Pigmente zu Primärteilchen. Die dadurch entstehenden Pulver stauben sehr stark und neigen aufgrund ihrer Feinteiligkeit zu Adhäsion und Kleben in Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen wie z.B. Eisenoxidpigmenten ist eine Vermeidung von Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung in Baustoffen ist deshalb das Ziel im Umgang mit Pigmenten. Dieses Ziel wird mehr oder weniger durch Anwendung von Granulationsverfahren auf Pigmente erreicht. Dabei werden Aufbau- oder Sprühgranulation im allgemeinen angewendet. Kompaktierverfahren sind bisher wegen der eingeschränkten Dispergierbarkeit der dadurch erhaltenen Granulate weniger geeignet.

Grundsätzlich werden bei Pigmenten vom Markt zwei sich in der Richtung gegensätzliche Eigenschaften beim Einsatz von Pigmentgranulaten gefordert: mechanische Stabilität des Granulats und gute Dispergiereigenschaften. Die mechanische Stabilität ist verantwortlich für gute Transporteigenschaften sowohl bei Transport zwischen Hersteller und Anwender als auch für gute Dosierung und Fließeigenschaften beim Einsatz der Pigmente. Sie wird durch hohe Haftkräfte bewirkt und hängt ab z.B. von Bindemittelmenge oder auch vom Preßdruck beim Verformen. Andererseits wird die Dispergierbarkeit beeinflußt durch eine gute Mahlung vor der Granulierung (Naß- und Trockenmahlung), die mechanische Energie bei der Einarbeitung (Scherkräfte) und Dispergierhilfsmittel, die die Haftkräfte im trockenen Granulat bei der Einarbeitung in ein Medium sofort herabsetzen. Allerdings ist bei Pigmenten die Anwendung von größeren Mengen Dispergierhilfsmittel wegen des Kostenverhältnisses Zusatz/Pigment eingeschränkt. Außerdem bewirkt ein hoher Zusatzanteil eine entsprechende Herabsetzung der Farbstärke bzw. des Streuvermögens. Da die Farbstärkeschwankungen im allgemeinen unter ±5% liegen, ist auch der Einsatz von Zusatzstoffen begrenzt, selbst wenn diese gleichzeitig als Haftvermittler und Dispergierhilfsmittel wirken. Auch dürfen die Zusätze nicht die Gebrauchseigenschaften der Baustoffe nachteilig verändern, beispielsweise bei Beton die Festigkeit oder das Erstarrungsverhalten, bei Asphalt die Druckfestigkeit oder Abriebfestigkeit.

Nach dem Stand der Technik kommen als Herstellungsverfahren für Baustoffgranulate Sprühgranulation (Sprühtrocknung über Scheibe oder Düse) und Aufbaugranulation (Mischer, Wirbelschichtgranulator, Teller bzw. Trommel) in Frage.

Sprühtrocknungs-Granulation geht aus von Pigmentsuspensionen unter Verwendung von Bindemitteln. Entsprechende Verfahren sind in verschiedenen Schutzrechten beschrieben. Dabei werden wasserlösliche Bindemittel verwendet. So wird in der DE-A 3 619 363, EP-A 0 268 645 und EP-A 0 365 046 von organischen Substanzen ausgegangen wie z.B. Ligninsulfonate, Formaldehydkondensate, Gluconsäure, sulfatierte Polyglykolether, während gemäß den DE-A 3 918 694 und US-A 5 215 583 von anorganischen Salzen wie z.B. Silikat und Phosphat ausgegangen wird. Auch eine Kombination von Sprüh- und Aufbaugranulation ist beschrieben worden in der EP-A 0 507 046.

In den DE-A 3 619 363 (Spalte 3, Zeile 44-47) und EP-A 0 268 645 (Spalte 7, Zeile 18, 19) wird ausdrücklich die Anwendung eines Kompaktierverfahrens ausgenommen. Bei diesem Verfahren wird durch Anwendung von Druck ein starker Zusammenhalt der Teilchen erreicht, so daß zwar eine gute Transport-stabilität aber auch gleichzeitig erniedrigte Dispergiereigenschaften bewirkt werden.

Auch die anderen Verfahren sind in ihrer Anwendung eingeschränkt. Die Sprühgranulation erfordert wegen der Tropfenbildung die Verwendung von gut fließfähigen, also dünnflüssigen, Suspensionen. Für den Trocknungsvorgang ist somit eine größere Menge an Wasser zu verdampfen als bei der häufig einsetzbaren Wirbelschichttrocknung aus hochausgepreßten Pigmentfilterpasten. Dies führt zu höheren Energiekosten. Bei zuvor durch Kalzination hergestellten Pigmenten bedeutet die Sprühgranulation einen zusätzlichen Verfahrensschritt mit hohen Energiekosten. Außerdem fällt bei der Sprühgranulation ein mehr oder weniger großer Anteil an Feinmaterial im Staubfilter an, der wieder in die Produktion zurückgeführt werden muß.

Die Aufbaugranulation weist häufig auch Nachteile auf. Sie kann - ausgehend von Pigmentpulver - in Mischern unter hoher Turbulenz, im Wirbelschichtverfahren oder auch durch Teller- und Trommelgranulation durchgeführt werden. Allen diesen Verfahren gemeinsam ist, daß der Bindemittelbedarf, meistens Wasser, groß ist, so daß als zusätzlicher Verfahrensschritt eine Trocknung nachfolgen muß.

Auch werden hierbei Granulate unterschiedlicher Größe erhalten, insbesondere, wenn nicht ausreichend Bindemittel für die Pulvermenge zur Verfügung steht oder die aktuelle Verteilung nicht optimal ist. Dann kann ein gewisser Anteil als Granulat zu groß werden, während andererseits zu kleine und damit noch staubende Anteile vorliegen. Deshalb ist eine Klassierung der entstehenden Granulate erforderlich mit einem Rücklauf von Über- und Unterkorn.

Die Tellergranulation führt zu einem breiten Teilchengrößenspektrum von Granulaten. Wo dies wegen der schlechten Dispergierbarkeit zu großer Teilchen nicht erwünscht ist, muß durch intensive personelle Überwachung der Granuliervorgang verfolgt werden und durch manuelle Steuerung der Keimmenge die Granulatherstellung optimiert werden. Üblicherweise erfolgt auch hierbei eine Klassierung mit Rückführung des Über- und Unterkorns.

Aufgabe der vorliegenden Anmeldung war es aber, ein Verfahren zur Verfügung zu stellen, das die bisher beschriebenen Nachteile der Sprühgranulation oder der Aufbaugranulation in ihrer Anwendung auf anorganische Pigmente vermeidet und ausreichend stabile, dosierfähige, staubarme Granulate von gleich guter Dispergierbarkeit wie die bisher verwendeten Pulver zur Verfügung stellt. Darüber hinaus sollte eine Klassierung mit Rückführung von Über- und Unterkorn vermieden werden.

Es wurde nun gefunden, daß diese Aufgabe gelöst werden kann durch eine mehrstufige Kombination der Verfahrensschritte Mischen, Kompaktieren, Siebgranulieren und Tellergranulieren.

Gegenstand dieser Erfindung ist somit ein Verfahren zur Einfärbung von Baustoffen wie Beton oder Asphalt durch anorganische Pigmentgranulate, dadurch gekennzeichnet, daß anorganische Pigmente mit Bindemitteln in Mengen von 0,1 bis 10 Gew.-% unter Bildung eines kohäsiven Pulvers vermischt werden, dieses kohäsive Pulver einem Kompaktierschritt bei Linienkräften von 0,1 bis 15 kN/cm unterworfen wird, die dabei entstehenden Schülpen einer Dichte 0,5 bis 3,0 g/cm³ durch nachfolgendes Schroten auf einem Siebgranulator in Keime und Pulver zerlegt und diese durch Nachrollen auf einem Drehteller oder in einer Drehtrommel vollständig aufgranuliert und mit den Baustoffen vermischt werden.

Nach dem erfindungsgemäßen Verfahren ist ein Pigmentgranulat erhältlich, das sich bei einem d₅₀ von 0,2 bis 2 mm problemlos in Baustoffe einarbeiten läßt.

Bevorzugte anorganische Pigmente im Sinne dieser Erfindung sind Eisenoxid-, Titandioxid-, Chromoxid und/oder Rutilmischphasenpigmente.

Als Bindemittel werden die Haftungskräfte (Kohäsion) verbessernde Substanzen verwendet. Als solche stehen Wasser und wäßrige Lösungen zur Verfügung. Überraschenderweise können für die Einarbeitung in wäßrige Baustoffsysteme wie Zementmörtel und Beton nicht nur mit Wasser lösliche Substanzen verwendet werden, sondern auch wasserunlösliche Bindemittel, z.B. Öle, lassen sich vorteilhaft als Bindemittel anwenden. Dabei können Öle unterschiedlicher Herkunft zur Anwendung kommen. Neben technischen oder synthetischen Ölen wie z.B. Maschinenöl V 100 lassen sich auch biologisch abbaubare Öle pflanzlicher und tierischer Herkunft wie Rapsöl, Sojabohnenöl, Maiskeimöl, Olivenöl, Kokosnußöl, Sonnenblumenöl oder Tran einsetzen.

Bevorzugte Ausführungsformen sind in den Unteransprüchen angeführt.

Wesentlich bei dem erfindungsgemäßen mehrstufigen Granulationsverfahren ist, daß im ersten Schritt ein ausreichend kohäsives homogenes Material durch Zugabe des Bindemittels in einem Mischer erzeugt wird. Im zweiten Schritt erfolgt eine Kompaktierung.

Die verfahrenstechnisch wichtigste Kennziffer hierbei ist die Preßkraft (kN) pro cm Walzenbreite (Linienkraft). Beim Kompaktieren wird von einer linienförmigen Übertragung der Preßkraft ausgegangen, da eine Preßfläche nicht definiert werden kann und deshalb kein Druck (kN/cm²) berechenbar ist.

Die Kompaktierung sollte bevorzugt bei sehr niedrigen Linienkräften erfolgen. Die angewendeten Linienkräfte liegen im allgemeinen im untersten Bereich der kommerziell erhältlichen Geräte etwa zwischen 0,1 und 15 kN/cm. Die Haftkräfte innerhalb der Schülpen bestimmen mit den Bedingungen des nachfolgenden Siebgranulators (z.B. Flake Crusher der Firma Bepex GmbH, D-74211 Leingarten oder Firma Frewitt, Fribourg/Schweiz) die Größe des Vorgranulats (Keim) und das Verhältnis zwischen Keim und Pulver. Bevorzugt betragen die Linienkräfte 0,5 bis 10 kN/cm.

Durch dieses Verhältnis und die Verweilzeit bei der nachfolgenden Aufbaugranulation wird die optimale Teilchengröße der Granulate für Baustoff festgelegt. Dabei wird durch das richtige Verhältnis zwischen Vorgranulat und Pulver praktisch die gesamte Pigmentmenge in freifließendes, staubarmes Granulat überführt. Eine Rückführung von Über- und Unterkorn entfällt.

Diese Aufbaugranulation durch Nachrollen kann nach dem Stand der Technik auf handelsüblichen Drehtellern, Drageetrommeln oder Drehtrommeln vom Fachmann ohne weiteres durchgeführt werden.

Die Prüfung der Dispergierbarkeit für Baustoffe erfolgt in Zementmörtel nach folgendem Verfahren: In Beton erfolgte sie über die Farbstärkemessung an mit Weißzement hergestellten Prismen bei folgenden Daten:
Zement-Quarzsand-Verhältnis 1:4, Wasser-Zement-Wert 0,35, Pigmentierungshöhe 1,2 %, bezogen auf Zement, verwendeter Mischer von RK Toni Technik, Berlin, mit 5 l-Mischschüssel, Bauform 1551, Drehzahl 140 U/min, Ansatz: 500 g Zement. Nach 100 s werden 3 Mischungsproben (300 g) entnommen und Probekörper (5 x 10 x 2,5 cm) unter Druck hergestellt (300 bar). Härtung der Probekörper: 24 Std. bei 30°C und 95 % rel. Luftfeuchte mit anschließendem Trocknen 4 Stunden bei 60°C. Farbdatenmessung über Dataflash 2000 Datacolor International, Köln, 4 Meßpunkte je Stein, pro Pigmentmischung 12 Meßpunkte. Die erhaltenen Mittelwerte werden verglichen mit den Werten einer Referenzprobe. Beurteilt werden der Farbabstand E_{ab} und die Farbstärke (Referenzprobe = 100 %) (DIN 5033, DIN 6174). Die Dispergierbarkeit wird als gut bezeichnet bei einem Farbstärkenunterschied bis 5 % gegenüber der Referenzprobe, als befriedigend bei einem Unterschied bis 10 %.

Die Abprüfung der Dispergierbarkeit in Asphalt erfolgte nach folgendem Verfahren: Das Pigment/Pigmentgranulat wird in einem beheizbaren Labormischer (Rego-Mischer) zusammen mit einem Straßenbaubitumen des Typs B 80 (Handelsprodukt der Shell AG) und Zuschlagstoffen 60 Sekunden lang bei 180°C gemischt. Mit der Mischung werden Prüfkörper nach Marshall hergestellt ("The Shell Bitumen Handbook, Shell Bitumen U.K., 1990, S. 230-232). Farbtonunterschiede der Marshall-Körper zu einer vorgegebenen Vergleichsprobe werden farbmetrisch beurteilt (Minolta Chromameter II, Normlichtart C, Cielab-System, DIN 5033, DIN 6174) durch Vergleich der Rotwerte a*. Unterschiede in den a*-Werten Kleiner 0,5 Einheiten sind visuell nicht unterscheidbar.

Die Prüfung der Förderbarkeit erfolgt in einer Dosieranlage (PB 650 mit Schnecke NW 150) der Firma Würschum. Es wird hierbei so verfahren, daß ca. 100 kg Granulat mehrfach hintereinander über die Anlage dosiert werden bis das Material nicht mehr gefördert werden kann. Gut fließ- und förderbare Granulate zeigen nach einem Durchgang durch die Anlage sowenig Abrieb, daß problemlos ein zweiter Durchgang angeschlossen werden kann, d.h. stabile Granulate sind demnach solche, die zwei- oder mehrfach in der beschriebenen Anlage gefördert werden können.

Die Prüfung des Fließverhaltens erfolgt durch Beurteilung des Auslaufverhaltens aus einem Trichter mit 300 bis 1000 ml Volumen mit 8 mm Öffnung. Das Fließverhalten wird als gut bezeichnet, wenn das Material frei ausläuft. Erfolgt kein Materialfluß bzw. ein Fließen nur nach Klopfen, wird das Fließverhalten als nicht ausreichend betrachtet.

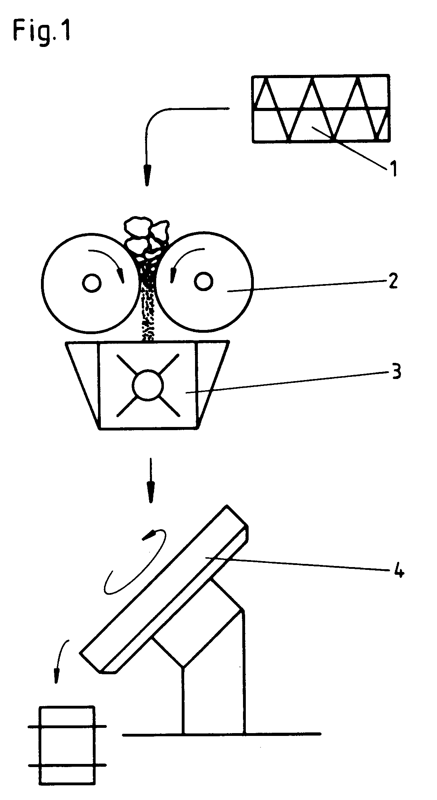

Beim erfindungsgemäßen Verfahren werden nacheinander verschiedene, als Einzelverfahren bekannte Granulierapparate in spezieller Abstimmung aufeinander in bestimmter Reihenfolge eingesetzt (Fig. 1). Dies sind Mischer (1), Kompaktor (2), Schroter (3) und Drehteller (4). Diese Einzelverfahren allein oder in anderen Kombinationen führen nicht zu den erfindungsgemäßen Granulaten mit den günstigen Eigenschaften hinsichtlich Ausbeute (praktisch kein Staubanteil), Fließverhalten, Förderbarkeit, Dispergierbarkeit, geringer Steuerungsaufwand bei der Herstellung. Dieses wird in der nachfolgenden Tabelle verdeutlicht, wobei die Summe der positiven Eigenschaften betrachtet werden soll (Tabelle 1).

Im folgenden wird anhand von Beispielen die vorliegende Erfindung erläutert, ohne daß in diesen Beispielen eine Einschränkung zu sehen ist.

### Beispiel 1

100 kg Eisenoxidrot Bayferox 130 (Handelsprodukt der Bayer AG) wurden mit 3 % (3 kg) Maschinenöl V 100 (Schmieröl nach DIN 51506, kinematische Viskosität bei 40°C (DIN 51 562) 100 mm²/s) in einen Mischer gegeben und intensiv gemischt. Diese Mischung wurde in einem Kompaktor (Pharmapaktor Bepex 200/50) bei Linienkräften <3 kN/cm verdichtet. Die entstandenen Schülpen mit einer Dicke von 2-3 mm werden im Siebgranulator mit einem Sieb mit 2 mm Maschenweite geschrotet. Das Vorgranulat wurde mit dem bei der Schrotung entstehenden Pulver auf einem Tellergranulator von 70 cm Durchmesser und Verweilzeiten von 5 bis 10 Minuten granuliert. Das entstehende Granulat wies eine Korngröße von 0,2 bis 2 mm auf mit einem d₅₀ von 0,69 mm. Es war praktisch staubfrei, rieselfähig und ausreichend transportstabil.

Die Einarbeitung in Zementmörtel erbrachte eine relative Farbstärke von 98 % gegenüber dem Pulverpigment.

Bei der Einarbeitung in Asphalt entsprach der erzielte Farbeindruck visuell dem mit Pulver erzielten Farbton. Der Unterschied im Rotton a* betrug 0,0 Einheiten gegenüber dem Pulverstandard.

### Beispiel 2

25 kg Chromoxid GN (Handelsprodukt der Bayer AG) wurden mit 3 % Maschinenöl V 100 wie in Beispiel 1 beschrieben, behandelt. Die vollständige Überführung des Pigmentpulvers in Granulatform führte zu einem d₅₀ von 0,53 mm.

Die Einarbeitung in Zementmörtel erbrachte eine relative Farbstärke von 99 % gegenüber dem Ausgangsmaterial.

### Beispiel 3

25 kg Eisenoxidrot 130 (Handelsprodukt der Bayer AG) wurden mit 2,5 % Pflanzenöl (Sonnenblumenöl, kinematische Viskosität bei 40°C 23 mm²/s) nach Beispiel 1 granuliert.

Das Granulat ergab in Zementmörtel eine relative Farbstärke von 97 % gegenüber dem Ausgangspulver.

### Beispiel 4

25 kg Eisenoxidrot Bayferrox 230 A (Handelsprodukt der Bayer AG) wurden nach Beispiel 1 granuliert und in Asphalt eingearbeitet. Der erzielte Farbeindruck in Asphalt entsprach visuell dem mit Pulver erzielten Farbton. Der Unterschied im Rotton a* betrug -0,3 Einheiten gegenüber dem Pulverstandard.

### Vergleichsbeispiel 1

25 kg Eisenoxidrot Bayferrox 130 wurden mit 3 % Maschinenöl V 100 in einem schnellaufenden Mischer (Fabrikat Lödige PM 50 mit Messerkopf Fa. Lödige D-4790 Paderborn) bei 130 UpM während 10 Minuten gemischt. Dabei wurde nur ein Teil granuliert, ein großer Teil lag als Staub vor.

### Beispiel 5

10 kg Eisenoxidrot Bayferrox 130, granuliert nach Beispiel 1, wurden in einer Drageetrommel zusätzlich mit 300 g (3 %) geschmolzenem Paraffin umhüllt. Der erzielte Farbeindruck in Asphalt entsprach visuell dem mit Pulver erzielten Farbton. Der Unterschied im Rotton a* betrug -0,2 Einheiten gegenüber dem Pulverstandard.

### Vergleichsbeispiel 2

3 kg Eisenoxidrot Bayferrox 130 wurden auf einem Mischgranulator der Fa. Eirich, D-6969 Hardheim, unter Zusatz von 5, 10 und 20 % Maschinenöl V 100 3 Minuten gemischt. Die Mischerdrehzahl betrug 84 UpM, die Wirblerdrehzahl 1500 UpM. Bei 5 und 10 % Ölzusatz wurde nur ein Teil aufgranuliert, ein großer Teil lag als Staub vor. Erst bei 20 % Ölzusatz wurde das gesamte Material aufgranuliert. 20 % Ölzusatz sind aus technischen und wirtschaftlichen Gründen (Bindemittelkosten, Farbstärkeverlust, Festigkeit) nicht tragbar.

### Beispiel 6

Das Granulat aus Beispiel 3 wurde in Asphalt eingearbeitet. Der erzielte Farbeindruck entsprach visuell dem mit Pulver erzielten Farbton. Der Unterschied im Rotton a* betrug -0,1 Einheiten gegenüber dem Pulverstandard.

### Beispiel 7

25 kg Eisenoxidrot Bayferrox 130 wurden unter Zusatz von 1 % Natriumhexametaphosphat (Grahamsches Salz) als 20 %ige Lösung wie in Beispiel 1 beschrieben, granuliert. Das entstehende Granulat wies eine Korngröße von 0,2-2 mm auf. Die Einarbeitung in Zementmörtel erbrachte eine relative Farbstärke von 95 % gegenüber dem Pulverpigment. Das Granulat wurde im Trockenschrank nachgetrocknet. Die Einarbeitung des getrockneten Granulats in Zementmörtel erbrachte eine Farbstärke von 94 % gegenüber dem Pulverpigment.

### Vergleichsbeispiel 3

100 kg Eisenoxidrot Bayferrox 130 wurden im Kompaktor bei Linienkräften von 25 kN/cm kompaktiert und geschrotet. Der Staubanteil wurde abgetrennt und das Splittergranulat von 0,2 bis 1 mm im Zementmörtel abgeprüft.
Die relative Farbstärke betrug nur 70 %.

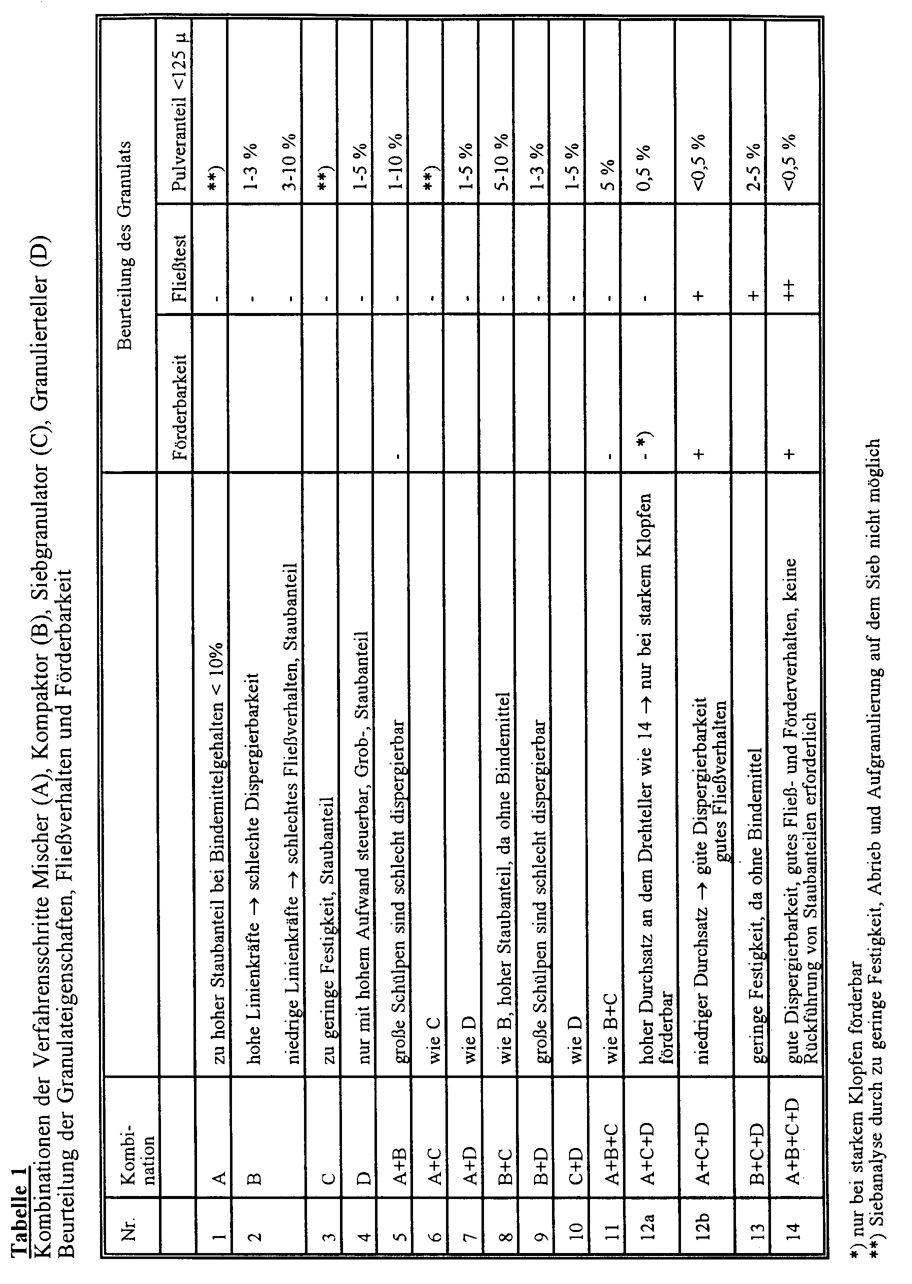

## Patentansprüche

1. Verfahren zur Einfärbung von Baustoffen wie Beton oder Asphalt durch anorganische Pigmentgranulate, dadurch gekennzeichnet, daß anorganische Pigmente mit Bindemitteln in Mengen von 0,1 bis 10 Gew.-% unter Bildung eines kohäsiven Pulvers vermischt werden, dieses kohäsive Pulver einem Kompaktierschritt bei Linienkräften von 0,1 bis 15 kN/cm unterworfen wird, die dabei entstehenden Schülpen einer Dichte 0,5 bis 3,0 g/cm³ durch nachfolgendes Schroten auf einem Siebgranulator in Keime und Pulver zerlegt und diese durch Nachrollen auf einem Drehteller oder in einer Drehtrommel vollständig aufgranuliert und mit den Baustoffen vermischt werden.

2. Verfahren gemäß Anspruch 1, dadurch gekennzeichnet, daß die Linienkräfte 0,5 bis 10 kN/cm betragen.

3. Verfahren gemäß einem der Ansprüche 1 oder 2, dadurch gekennzeichnet, daß als anorganische Pigmente Eisenoxid-, Titandioxid-, Chromoxid- und/oder Rutilmischphasenpigmente eingesetzt werden.

4. Verfahren gemäß einem oder mehreren der Ansprüche 1 bis 3, dadurch gekennzeichnet, daß als Bindemittel Wasser, wäßrige Lösungen von Salzen aus der Gruppe der Phosphate, Silikate, Aluminate, Borate und/oder wäßrige Lösungen von Polysacchariden, Celluloseethern und/oder Öle aus biologischem Anbau, raffinierte Erdöle auf paraffinischer und/oder naphthenischer Basis und/oder synthetisch hergestellte Öle eingesetzt werden.

5. Verfahren gemäß einem oder mehreren der Ansprüche 1 bis 4, dadurch gekennzeichnet, daß organische Bindemittel in Mengen von 0,1 bis 6 Gew.-% eingesetzt werden.

6. Verfahren gemäß einem oder mehreren der Ansprüche 1 bis 4, dadurch gekennzeichnet, daß als Bindemittel 0,1 bis 10 Gew.-% Wasser eingesetzt wird.

7. Verfahren gemäß einem oder mehreren der Ansprüche 1 bis 4, dadurch gekennzeichnet, daß als Bindemittel 0,1 bis 10 Gew.-% wäßrige Lösungen mit bis zu 50 % Salzen oder Polysacchariden oder Celluloseethern eingesetzt werden.

8. Verfahren gemäß einem oder mehreren der Ansprüche 1 bis 4, dadurch, gekennzeichnet, daß als Bindemittel Öle aus biologischem Anbau oder technischer bzw. synthetischer Herstellung in einer Menge von 0,01 bis 6 Gew.-%, bevorzugt 0,1 bis 5 Gew.-% eingesetzt werden.

9. Verfahren gemäß einem oder mehreren der Ansprüche 4, 6 und 8, dadurch gekennzeichnet, daß als Bindemittel Öle mit einer kinematischen Viskosität von 1,6 bis 1500 mm²/s bei 40°C nach DIN 51 562 eingesetzt werden.

10. Verfahren gemäß einem oder mehreren der Ansprüche 1 bis 9, dadurch gekennzeichnet, daß als Bindemittel Mischungen oder Emulsionen der Stoffe nach Anspruch 3 bis 7 eingesetzt werden.

11. Verfahren gemäß einem oder mehreren der Ansprüche 1 bis 10, dadurch gekennzeichnet, daß die Granulate nachgetrocknet werden.

## Claims

1. Process for the colouring of building materials such as concrete or asphalt by inorganic pigment granulates, characterized in that inorganic pigments are mixed with binders in amounts of 0.1 to 10 wt% with formation of a cohesive powder, this cohesive powder is subjected to a compacting stage at line forces of 0.1 to 15 kN/cm, the flakes of a density of 0.5 to 3.0 g/cm³ formed in the course of this are broken down by subsequent crushing in a screen granulator into nuclei and powder and these are completely pelletized by rerolling on a rotating pan or in a rotating drum and mixed with the building materials.

2. Process according to Claim 1, characterized in that the line forces amount to 0.5 to 10 kN/cm.

3. Process according to one of Claims 1 and 2, characterized in that iron oxide pigments, titanium dioxide pigments, chromic oxide pigments and/or rutile mixed phase pigments are used as inorganic pigments.

4. Process according to one or more of Claims 1 to 3, characterized in that water, aqueous solutions of salts from the group of phosphates, silicates, aluminates, borates and/or aqueous solutions of polysaccharides, cellulose ethers and/or oils from organic farming, refined paraffin- and/or naphthene-base crude oils and/or synthetic oils are used as binders.

5. Process according to one or more of Claims 1 to 4, characterized in that organic binders are used in amounts of 0.1 to 6 wt%.

6. Process according to one or more of Claims 1 to 4, characterized in that 0.1 to 10 wt% of water is used as binder.

7. Process according to one or more of Claims 1 to 4, characterized in that 0.1 to 10 wt% aqueous solutions having up to 50 % salts or polysaccharides or cellulose ethers are used as binder.

8. Process according to one or more of Claims 1 to 4, characterized in that oils from organic farming or technical or synthetic production in an amount of 0.01 to 6 wt%, preferably 0.1 to 5 wt%, are used as binder.

9. Process according to one or more of Claims 4, 6 and 8, characterized in that oils with a kinematic viscosity of 1.6 to 1500 mm²/s at 40 °C according to DIN 51 562 are used as binder.

10. Process according to one or more of Claims 1 to 9, characterized in that mixtures or emulsions of the substances according to Claims 3 to 7 are used as binder.

11. Process according to one or more of Claims 1 to 10, characterized in that the granulates are after-dried.

## Revendications

1. Procédé de coloration de matériaux de construction comme béton ou asphalte au moyen de granulats de pigments inorganiques, caractérisé par le fait que l'on mélange des pigments inorganiques avec des liants dans des proportions de 0,1 à 10% en poids en formant une poudre cohérente, on soumet cette poudre cohérente à un pas de compactage avec des forces linéaires de 0,1 à 15 kN/cm, on décompose, sur un granulateur sur crible, les écailles qui y apparaissent, d'une densité de 0,5 à 3,0 g/cm³, par un broyage venant à la suite, en germes et en poudre et on granule complètement ceux-ci par calandrage sur un plateau tournant ou dans un tambour tournant et on les mélange avec les matériaux de construction.

2. Procédé selon la revendication 1, caractérisé par le fait que les forces linéaires valent 0,5 à 10 kN/cm.

3. Procédé selon l'une des revendications 1 ou 2, caractérisé par le fait que comme pigments inorganiques on emploie des pigments d'oxyde de fer, des pigments de dioxyde de titane, des pigments d'oxyde de chrome et/ou des pigments de phases mixtes de rutile.

4. Procédé selon une ou plusieurs des revendications 1 à 3, caractérisé par le fait que comme liant on emploie de l'eau, des solutions aqueuses de sels du groupe des phosphates, des silicates, des aluminates, des borates et/ou des solutions aqueuses de polysaccharides, des éthers cellulosiques et/ou des huiles d'origine biologique, des huiles minérales raffinées à base paraffinique et/ou naphténique et/ou des huiles de fabrication synthétique.

5. Procédé selon l'une ou plusieurs des revendications 1 à 4, caractérisé par le fait que l'on emploie des liants organiques dans les proportions de 0,1 à 6% en poids.

6. Procédé selon l'une ou plusieurs des revendications 1 à 4, caractérisé par le fait que comme liant on emploie 0,1 à 10% en poids d'eau.

7. Procédé selon l'une ou plusieurs des revendications 1 à 4, caractérisé par le fait que comme liant on emploie 0,1 à 10% en poids de solution aqueuse contenant jusqu'à 50% de sels ou de polysaccharide ou d'éthers cellulosiques.

8. Procédé selon l'une ou plusieurs des revendications 1 à 4, caractérisé par le fait que comme liant on emploie des huiles d'origine biologique ou de fabrication technique ou synthétique dans une proportion allant de 0,01 à 6% en poids, de préférence 0,1 à 5% en poids.

9. Procédé selon l'une ou plusieurs des revendications 4, 6 et 8, caractérisé par le fait que comme liant on emploie des huiles de viscosité cinématique allant de 1,6 à 1500 mm²/s à 40°C selon DIN 51 562.

10. Procédé selon l'une ou plusieurs des revendications 1 à 9, caractérisé par le fait que comme liant on emploie des mélanges et des émulsions des matériaux conformes aux revendications 3 à 7.

11. Procédé selon l'une ou plusieurs des revendications 1 à 10, caractérisé par le fait que l'on procède à un postséchage des granulats.
